(19)

Europäisches
Patentamt
European
Patent Office
Office européen
des brevets

(11) **EP 4 787 489 A1**

(12) **EUROPEAN PATENT APPLICATION**
published in accordance with Art. 153(4) EPC

(43) Date of publication:
**05.08.2026 Bulletin 2026/32**

(21) Application number: **24886385.4**

(22) Date of filing: **04.11.2024**

(51) International Patent Classification (IPC):
*H01M 4/525* (2010.01)       *H01M 4/505* (2010.01)
*C01G 53/00* (2025.01)       *H01M 4/131* (2010.01)
*H01M 10/052* (2010.01)       *H01M 4/02* (2006.01)

(52) Cooperative Patent Classification (CPC):
**C01G 53/00; H01M 4/02; H01M 4/131; H01M 4/505;**
**H01M 4/525; H01M 10/052;** Y02E 60/10

(86) International application number:
**PCT/KR2024/017107**

(87) International publication number:
**WO 2025/095715 (08.05.2025 Gazette 2025/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **03.11.2023  KR 20230151122**

(71) Applicant: **LG Chem, Ltd.**
**Seoul 07336 (KR)**

(72) Inventors:
• **HA, Seoung Chul**
  **Daejeon 34122 (KR)**
• **KIM, Min Hoon**
  **Daejeon 34122 (KR)**
• **SEOK, Eun Jeong**
  **Daejeon 34122 (KR)**

• **YOU, Min Kyu**
  **Daejeon 34122 (KR)**
• **SHIN, Ji A**
  **Daejeon 34122 (KR)**
• **HEO, Un Seon**
  **Daejeon 34122 (KR)**
• **LEE, Jee Ho**
  **Daejeon 34122 (KR)**
• **KIM, Sun Cheol**
  **Daejeon 34122 (KR)**
• **LIM, Seung Woo**
  **Daejeon 34122 (KR)**
• **SHIN, Ye Won**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL, METHOD FOR MANUFACTURING SAME, AND POSITIVE ELECTRODE AND LITHIUM SECONDARY BATTERY COMPRISING SAME**

(57)    The present invention relates a positive electrode active material comprising: a lithium composite transition metal oxide which is in the form of a single particle composed of 10 or less primary particles and contains nickel at 50 mol% or more of the total metal excluding lithium, wherein the positive electrode active material has a single crystallinity ($\chi$) according to Equation 1 described herein of 0.500 or more and 0.850 or less, and a crystal grain size (D) of 2.00 $\mu$m or more and 5.00 $\mu$m or less, a method for manufacturing the same, and a positive electrode and a lithium secondary battery comprising the same.

[FIG. 1]

EP 4 787 489 A1

**Description**

**Technical Field**

CROSS-REFERENCE TO RELATED APPLICATION

The present application claims priority to Korean Patent Application No. 10-2023-0151122, filed on November 3, 2023, the entire content of which is incorporated herein for all purposes by reference.

Technical Field

The present invention relates to a positive electrode active material, a method for manufacturing the same, and a positive electrode and a lithium secondary battery including the same.

**Background Art**

A lithium secondary battery is generally composed of a positive electrode, a negative electrode, a separator, and an electrolyte, wherein the positive electrode and the negative electrode include an active material capable of intercalating and deintercalating lithium ions.

As a positive electrode active material for the lithium secondary battery, a lithium cobalt oxide ($LiCoO_2$), a lithium nickel oxide ($LiNiO_2$), a lithium manganese oxide ($LiMnO_2$, $LiMnO_4$, or the like), a lithium iron phosphate compound ($LiFePO_4$), etc. have been used. Among them, the lithium cobalt oxide has the advantages of high operating voltage and excellent capacity characteristics, but the price of cobalt, which is a raw material, is high and its supply is unstable, making it difficult to commercially apply it to a large-capacity battery. The lithium nickel oxide has poor structural stability, making it difficult to achieve sufficient lifespan characteristics. Meanwhile, the lithium manganese oxide has excellent stability, but has a problem of poor capacity characteristics. Accordingly, in order to complement the problems of the lithium transition metal oxides containing Ni, Co, or Mn alone, lithium composite transition metal oxides containing two or more transition metals have been developed, and among them, a lithium composite transition metal oxide containing Ni, Co, and Mn are widely used in the field of electric vehicle batteries.

Recently, there has been an increasing demand for high-power and high-capacity batteries, such as batteries for electric vehicles, and accordingly, the nickel content in the lithium composite transition metal oxide is gradually increasing. When the nickel content in the lithium composite transition metal oxide increases, the initial capacity characteristics are improved, but when charging and discharging are repeated, a large amount of highly reactive $Ni^{+4}$ ions are generated to cause structural collapse of the positive electrode active material. As a result, the positive electrode active material deteriorates at an increased rate, thereby degrading lifespan characteristics and battery safety.

In addition, conventional lithium composite transition metal oxide was generally in the form of a spherical secondary particle in which tens to hundreds of primary particles are aggregated. However, in the case of the lithium composite transition metal oxide in the form of a secondary particle in which a large number of primary particles are aggregated, there is a problem in that particle breakage, in which primary particles fall off, is likely to occur during the rolling process when manufacturing a positive electrode, and cracks occur inside the particles during the charging and discharging process. When the particle breakage or cracks of the positive electrode active material are generated, the contact area with an electrolyte increases, thereby causing a side reaction with the electrolyte, and increasing gas generation and active material degradation, which leads to a problem in that the lifespan characteristics are reduced.

In order to solve the above problems, a technology has been proposed to manufacture a positive electrode active material in the form of a single particle rather than a secondary particle by increasing the calcination temperature when manufacturing a lithium composite transition metal oxide. In the case of the positive electrode active material in the form of a single particle, compared to the conventional positive electrode active material in the form of a secondary particle, the contact area with an electrolyte is small, so that there is less side reaction with the electrolyte, and the particle strength is excellent, so that there is less particle breakage during the manufacture of the electrode. Therefore, when the positive electrode active material in the form of a single particle is applied, there is an advantage that gas generation and lifespan characteristics are excellent.

However, in the case of the lithium composite transition metal oxide particles in the form of a single particle, compared to the conventional lithium composite transition metal oxide particles in the form of a secondary particle, the size of the primary particles is relatively large, and the interfaces between the primary particles, which serve as paths for lithium ions to diffuse, are small, so that the lithium mobility is low, and they are manufactured at a relatively high calcination temperature, so that a rock salt-phase is formed on the particle surface, resulting in high surface resistance. In addition, in the case of the lithium composite transition metal oxide particles in the form of a single particle, there is a problem that the lithium diffusion resistance is large, and lithium ion movement occurs unevenly during charging and discharging, thereby easily causing crystal structure deformation and thus particle cracks, which results in deterioration of battery performance.

**[Prior Art Literature]**

**[Patent Documents]**

(Patent Document 1) Korean Patent Laid-Open Publication No. 10-2019-0131842

**Disclosure**

**Technical Problem**

The present invention is intended to solve the above problems, and to provide a positive electrode active material capable of improving the rolling density of the positive electrode active material while improving the output characteristics, rate characteristics, and resistance characteristics of a battery, and a method for manufacturing the same.

In addition, the present invention aims to provide a positive electrode and a lithium secondary battery including the above positive electrode active material and thus having excellent energy density, output characteristics, rate characteristics, and resistance characteristics.

**Technical Solution**

(1) The present invention provides a positive electrode active material comprising: a lithium composite transition metal oxide which is in the form of a single particle composed of 10 or less primary particles and contains nickel at 50 mol% or more of the total metal excluding lithium, wherein the positive electrode active material has a single crystallinity ($\chi$) according to Equation 1 below of 0.500 or more and 0.850 or less, and a crystal grain size (D) of 2.00 $\mu$m or more and 5.00 $\mu$m or less:

[Equation 1]

$$X = \text{crystal grain size (D) (}\mu\text{m) / average particle diameter of primary particle}$$

$$(D_{50}) \ (\mu\text{m})$$

(2) The present invention provides the positive electrode active material according to (1) above, wherein the lithium composite transition metal oxide has a composition represented by Chemical Formula 1 below:

[Chemical Formula 1]          $Li_{1+x}Ni_aCo_bMn_cM^1_dO_2$

wherein:

$M^1$ is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si, and
$-0.10 \leq x \leq 0.10$, $0.500 \leq a < 1.000$, $0 < b < 0.500$, $0 < c < 0.500$, $0 \leq d \leq 0.100$, and $a+b+c+d=1$.

(3) The present invention provides the positive electrode active material according to (1) or (2) above, wherein the lithium composite transition metal oxide includes at least one doping element selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si.

(4) The present invention provides the positive electrode active material according to any one of (1) to (3) above, wherein the average particle diameter ($D_{50}$) of the primary particles is 2.35 $\mu$m or more and 6.00 $\mu$m or less.

(5) The present invention provides a positive electrode comprising the positive electrode active material according to any one of (1) to (4) above.

(6) The present invention provides a lithium secondary battery comprising the positive electrode according to (5) above.

## Advantageous Effects

The positive electrode active material according to the present invention comprises a lithium composite transition metal oxide which is in the form of a single particle and contains nickel at 50 mol% or more of the total metal excluding lithium, and has a specific range of single crystallinity and a specific range of crystal grain size, thereby exhibiting an effect of improving the energy density, output characteristics, rate characteristics, and resistance characteristics of a battery including the same.

Accordingly, the performance of a positive electrode and a secondary battery including the positive electrode active material, particularly the energy density, output characteristics, resistance characteristics, etc. can be improved.

## Description of Drawings

FIG. 1 is a SEM image of a positive electrode active material manufactured in Example 1.
FIG. 2 is a SEM image of a positive electrode active material manufactured in Example 2.
FIG. 3 is a SEM image of a positive electrode active material manufactured in Comparative Example 1.
FIG. 4 is a SEM image of a positive electrode active material manufactured in Comparative Example 2.
FIG. 5 is a SEM image of a positive electrode active material manufactured in Comparative Example 3.
FIG. 6 is a SEM image of a positive electrode active material manufactured in Comparative Example 4.
FIG. 7 is an IPF map obtained by EBSD analysis of a positive electrode for EBSD analysis manufactured using the positive electrode active material manufactured in Example 1.
FIG. 8 is an IPF map obtained by EBSD analysis of a positive electrode for EBSD analysis manufactured using the positive electrode active material manufactured in Example 2.
FIG. 9 is an IPF map obtained by EBSD analysis of a positive electrode for EBSD analysis manufactured using the positive electrode active material manufactured in Comparative Example 1.
FIG. 10 is an IPF map obtained by EBSD analysis of a positive electrode for EBSD analysis manufactured using the positive electrode active material manufactured in Comparative Example 2.
FIG. 11 is an IPF map obtained by EBSD analysis of a positive electrode for EBSD analysis manufactured using the positive electrode active material manufactured in Comparative Example 3.
FIG. 12 is an IPF map obtained by EBSD analysis of a positive electrode for EBSD analysis manufactured using the positive electrode active material manufactured in Comparative Example 4.

## Best Modes of the Invention

Hereinafter, the present invention will be described in more detail to help understand the present invention.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his/her invention.

It should be understood that terms such as 'comprise', 'include', and "have" as used herein are intended to designate the presence of implemented features, numbers, steps, components, or combinations thereof, but not to preclude a possibility of existence or addition of one or more other features, numbers, steps, components, or combinations thereof.

In this specification, a single particle form means both that the positive electrode active material and/or the lithium composite transition metal oxide particle is a single particle and that it is a form in which 2 or more and 10 or less primary particles are aggregated. That is, the single particle form of the positive electrode active material and/or the single particle form of the lithium composite transition metal oxide of the present invention may include at least one selected from the group consisting of a single particle form of the positive electrode active material and/or the lithium composite transition metal oxide particle, and a particle form in which 2 or more and 10 or less primary particles are aggregated.

In this specification, a 'primary particle' refers to a minimum particle unit recognized when observing a positive electrode active material using a scanning electron microscope (SEM), and a 'secondary particle' refers to a secondary structure formed by agglomeration of a plurality of primary particles.

In this specification, a 'crystal grain' refers to a particle unit having substantially the same crystal orientation, and may be measured by Electron Backscatter Diffraction (EBSD). Specifically, it is the smallest particle unit displayed in the same color in the IPF map obtained by EBSD analysis of a cross-section of the positive electrode active material cut through ion milling.

In this specification, a particle diameter of the primary particle may be calculated by calculating the area of each primary particle through the number of pixels corresponding to each of n primary particles present in the SEM image, and calculating the particle diameter of each primary particle present in the SEM image using the radius of a circle having the same area as the area of each primary particle. In addition, in this specification, an average particle diameter ($D_{50}$) of the primary particle may be defined as a particle diameter corresponding to 50% of the volume cumulative distribution in a particle size distribution curve (a graph curve of a particle size distribution diagram) of each particle. The average particle diameter ($D_{50}$) of the primary particle may be measured by taking the volume of a sphere whose radius is half of the particle diameter of the primary particle as the volume of the primary particle, and then calculating the particle diameter at a point where 50% of the volume cumulative distribution according to the particle diameter in the result of calculating the volume of the primary particle is reached.

In this specification, the size (D) of a crystal grain may be an arithmetic average value of the crystal grain particle diameters. The particle diameter can be measured through image analysis. Specifically, an IPF map of the particles is obtained using EBSD, and the particle diameter of the crystal grain is calculated by the area of the crystal grains confirmed in the obtained map image, and then the arithmetic average value thereof may be obtained to calculate the size of the crystal grains.

In this specification, the content of each element in a lithium composite transition metal oxide may be measured through an inductive coupled plasma (ICP) analysis using an inductively coupled plasma optical emission spectrometer (ICP-OES; Agilent 5100, Agilent Technologies).

**Positive Electrode Active Material**

Hereinafter, a positive electrode active material according to the present invention will be described.

The positive electrode active material according to the present invention comprises: a lithium composite transition metal oxide which is in the form of a single particle composed of 10 or less primary particles and contains nickel at 50 mol% or more of the total metal excluding lithium, wherein the positive electrode active material has a single crystallinity ($\chi$) according to Equation 1 below of 0.500 or more and 0.850 or less, and a crystal grain size (D) of 2.00 $\mu$m or more and 5.00 $\mu$m or less:

$$\chi = \text{crystal grain size (D) } (\mu\text{m}) \text{ / average particle diameter of primary particle } (D_{50}) \text{ } (\mu\text{m}) \qquad \text{[Equation 1]}$$

Meanwhile, in the case of a positive electrode active material in which the lithium composite transition metal oxide is not in the form of a single particle composed of 10 or less primary particles and contains nickel at less than 50 mol% of the total metal excluding lithium, a single crystallinity according to Equation 1 above is less than 0.500 or more than 0.850, and a crystal grain size (D) is less than 2.00 $\mu$m or more than 5.00 $\mu$m, there were problems that the energy density was inferior, and the output characteristics, rate characteristics, and resistance characteristics were inferior.

The present inventors have conducted repeated studies to develop a positive electrode active material having excellent output characteristics, rate characteristics, and resistance characteristics, and as a result, have found that in the case of a positive electrode active material comprising a lithium composite transition metal oxide which is in the form of a single particle composed of 10 or less primary particles and contains nickel at 50 mol% or more of the total metal excluding lithium, the single crystallinity ($\chi$) according to Equation 1 described herein is 0.500 or more and 0.850 or less, and the crystal grain size (D) in Equation 1 described herein is 2.00 $\mu$m or more and 5.00 $\mu$m or less, the lithium mobility can be improved by controlling the interfaces between the crystal grains, which serve as paths for lithium ions to migrate inside the positive electrode active material particles, while increasing the rolling density, thereby completing the present invention. Accordingly, a battery to which the positive electrode active material according to the present invention is applied can have excellent energy density, output characteristics, rate characteristics, and resistance characteristics.

The lithium composite transition metal oxide is in the form of a single particle composed of 10 or less primary particles. That is, the lithium composite transition metal oxide is in the form of a single particle, or a single particle in which 2 or more and 10 or less particles are aggregated. The single particle form is distinguished from a secondary particle in which more than 10 primary particles are aggregated. When the lithium composite transition metal oxide has a single particle form, the stability is excellent, so that even if the positive electrode active material including the same is rolled, the positive electrode active material is not broken or cracked. As a result, the side reaction between the positive electrode active material and an electrolyte can be reduced, and the lifespan characteristics of a battery to which it is applied can be improved. On the other hand, when the lithium composite transition metal oxide is in the form of a secondary particle, there is a problem that the particle strength is low, and thus, the particle breakage is severe when the electrode is manufactured and then rolled, and a lot of gas is generated when the cell is operated, resulting in poor stability and lifespan characteristics.

The lithium composite transition metal oxide contains nickel at 50 mol% or more of the total metals excluding lithium. Specifically, it contains nickel at 50 mol% or more, 55 mol% or more, 60 mol% or more, or 61 mol% or more of the total metals excluding lithium. When nickel is within the above range among the total metals excluding lithium, high capacity characteristics can be implemented. When nickel is less than 50 mol% among the total metals excluding lithium, there is a problem that capacity characteristics are inferior.

The present inventors evaluated the single crystallinity and expressed it as a parameter represented by Equation 1 above. The single crystallinity referred to in the present invention is a value controlled according to the size (D) of the crystal grains forming the single particle and the average particle diameter ($D_{50}$) of the primary particles forming the lithium composite transition metal oxide, which is a single particle. The size (D) of the crystal grains was measured using an EBSD device, and the average particle diameter ($D_{50}$) of the primary particles was measured using a scanning electron microscope (SEM). The present inventors measured the crystal grain size using an EBSD device, considering that the crystal grain size is large, specifically, because it is difficult to trust XRD data using FWHM when the crystal grain size is 150 to 200 nm or more, and measured the average particle diameter of the primary particles using a scanning electron microscope (SEM), considering that the lithium composite transition metal oxide is a single particle, specifically, in order to distinguish adjacent single particles, thereby deriving Equation 1 above.

First, the crystal grain size (D) in Equation 1 above refers to an average crystal grain particle diameter measured by analyzing the electrode cross-section obtained by ion milling the electrode manufactured by applying the above positive electrode active material through electron backscatter diffraction (EBSD). Specifically, the area of each crystal grain is calculated through the number of pixels corresponding to each of n crystal grains present in the image of an IPF map obtained by EBSD analysis, and the diameter of a circle having the same area as the area of each crystal grain is taken as the particle diameter of the crystal grain. The size (D) of the crystal grains refers to an arithmetic average value of the crystal grain particle diameters, and the value may be obtained through software of the EBSD device.

The average particle diameter ($D_{50}$) of the primary particles in Equation 1 above refers to the diameter of the primary particles at a point where 50% of the volume cumulative distribution according to the primary particle diameter obtained by analysis after obtaining the SEM image of the positive electrode active material is reached. Specifically, it may be measured by taking the volume of a sphere whose radius is half of the particle diameter of the primary particle as the volume of the primary particle, and then calculating the particle diameter at a point where 50% of the volume cumulative distribution according to the particle diameter in the result of calculating the volume of the primary particle is reached.

Equation 1 above is obtained by dividing the crystal grain size (D) measured through EBSD analysis by the average particle diameter ($D_{50}$) of the primary particle measured through SEM image analysis. The closer the crystal grain size (D) is to the average particle diameter ($D_{50}$) of the primary particle, the higher the single crystallinity. That is, the maximum value of the single crystallinity is 1, which means that one primary particle is composed of one crystal grain.

The positive electrode active material has a single crystallinity ($\chi$) according to Equation 1 described herein of 0.500 or more and 0.850 or less. The single crystallinity ($\chi$) may be 0.500 or more, 0.510 or more, 0.520 or more, 0.530 or more, 0.540 or more, 0.550 or more, 0.560 or more, 0.570 or more, 0.580 or more, 0.590 or more, 0.60 or more, 0.610 or more, 0.620 or more, 0.630 or more, 0.640 or more, 0.650 or more, 0.660 or more, 0.670 or more, 0.680 or more, 0.690 or more, 0.700 or more, 0.710 or more, 0.720 or more, 0.730 or more, 0.740 or more, 0.750 or more, 0.760 or more, 0.770 or more, 0.780 or more, 0.790 or more, 0.800 or more, 0.810 or more, or 0.820 or more, and may be 0.830 or less, 0.840 or less, or 0.850 or less. In particular, when the single crystallinity ($\chi$) is 0.800 or more and 0.850 or less, it means that the lithium composite transition metal oxide has two or more crystal grains, and the interfaces between the crystal grains, which serve as paths for lithium ions to migrate inside the positive electrode active material particles, is adjusted, so that the lithium mobility can be improved, and the output characteristics, rate characteristics, and resistance characteristics of the secondary battery can be improved. On the other hand, when the single crystallinity is less than 0.500, there is a problem that the efficiency and resistance characteristics are inferior because the interfaces between the crystal grains, which serve as paths for lithium ions to migrate inside the lithium composite transition metal oxide particles, is excessive. Specifically, in the case of a secondary particle other that at single particle, the single crystallinity is less than 0.500. When the single crystallinity is more than 0.850, there is a problem that the lithium mobility is low, and thus the output characteristics, rate characteristics, and resistance characteristics of the secondary battery are inferior because the interfaces between the crystal grains, which serve as paths for lithium ions to migrate inside the lithium composite transition metal oxide particles, is small.

According to the present invention, the size (D) of the crystal grains is 2.00 $\mu$m or more and 5.00 $\mu$m or less. Specifically, the size (D) of the crystal grains may be 2.00 $\mu$m or more, 2.10 $\mu$m or more, 2.20 $\mu$m or more, 2.30 $\mu$m or more, 2.40 $\mu$m or more, or 2.50 $\mu$m or more, and 2.60 $\mu$m or less, 2.70 $\mu$m or less, 2.80 $\mu$m or less, 2.90 $\mu$m or less, 3.00 $\mu$m or less, 3.10 $\mu$m or less, 3.20 $\mu$m or less, 3.30 $\mu$m or less, 3.40 $\mu$m or less, 3.50 $\mu$m or less, 3.60 $\mu$m or less, 3.70 $\mu$m or less, 3.80 $\mu$m or less, 3.90 $\mu$m or less, 4.00 $\mu$m or less, 4.10 $\mu$m or less, 4.20 $\mu$m or less, 4.30 $\mu$m or less, 4.40 $\mu$m or less, 4.50 $\mu$m or less, 4.60 $\mu$m or less, or 4.70 $\mu$m or less, and may be 4.80 $\mu$m or less, 4.90 $\mu$m or less, or 5.00 $\mu$m or less. When the size (D) of the crystal grains is within the above range, the interfaces between the crystal grains, which serve as paths for lithium ions to migrate inside the positive electrode active material particles, exists to an appropriate degree, so that the lithium mobility can be improved, and thus the output characteristics, rate characteristics, and resistance characteristics of the secondary battery can be improved. When the size (D) of the crystal grains is less than 2.00 $\mu$m or more than 5.00 $\mu$m, there is a problem that the lithium mobility is reduced, and thus, the output characteristics, rate characteristics, and resistance characteristics of the secondary battery are inferior because the interfaces between the crystal grains, which serve as paths for lithium ions to migrate inside the positive electrode active material particles, is too much or too little. In addition, since it is necessary to calcine at a high temperature of more than 1000°C in order to manufacture a positive electrode active material having the crystal grain size (D) of more than 5.00 $\mu$m, it is practically difficult to manufacture the positive electrode active material having the crystal grain size (D) of more than 5.00 $\mu$m.

According to one embodiment of the present invention, the lithium composite transition metal oxide may have a composition represented by Chemical Formula 1 below:

$$[\text{Chemical Formula 1}] \qquad Li_{1+x}Ni_aCo_bMn_cM^1_dO_2$$

wherein:

$M^1$ is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si, and $-0.10 \leq x \leq 0.10$, $0.500 \leq a < 1.000$, $0 < b < 0.500$, $0 < c < 0.500$, $0 \leq d \leq 0.100$, and $a+b+c+d=1$.

The $M^1$ is a doping element, and specifically, is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si. The $M^1$ is not necessarily included, but can improve capacity characteristics and lifespan characteristics. In particular, when $M^1$ is Zr or Y, it acts as a flux during calcination and can improve resistance characteristics and lifespan characteristics.

The x may be -0.10 or more, -0.09 or more, -0.08 or more, -0.07 or more, -0.06 or more, -0.05 or more, -0.04 or more, -0.03 or more, -0.02 or more, -0.01 or more, 0 or more, 0.01 or more, 0.02 or more, 0.03 or more, 0.04 or more, or 0.05 or more, and may be 0.06 or less, 0.07 or less, 0.08 or less, 0.09 or less, or 0.10 or less. When the x satisfies the above range, high safety and high energy density per unit volume can be implemented.

The a is a molar ratio of nickel (Ni) among the total metals excluding lithium in the lithium composite transition metal oxide, and may be 0.500 or more, 0.510 or more, 0.520 or more, 0.530 or more, 0.540 or more, 0.550 or more, 0.560 or more, 0.570 or more, 0.580 or more, 0.590 or more, 0.600 or more, or 0.610 or more, and may be 0.620 or less, 0.630 or less, 0.640 or less, 0.650 or less, 0.660 or less, 0.670 or less, 0.680 or less, 0.690 or less, 0.700 or less, 0.710 or less, 0.720 or less, 0.730 or less, 0.740 or less, 0.750 or less, 0.760 or less, 0.770 or less, 0.780 or less, 0.790 or less, 0.800 or less, 0.810 or less, 0.820 or less, 0.830 or less, 0.840 or less, 0.850 or less, 0.860 or less, 0.870 or less, 0.880 or less, 0.890 or less, 0.900 or less, 0.910 or less, 0.920 or less, 0.930 or less, 0.940 or less, 0.950 or less, 0.960 or less, 0.970 or less, 0.980 or less, 0.990 or less, or less than 1.000. When the a satisfies the above range, high energy characteristics can be implemented, and in particular, when the a is 0.600 or more and 0.700 or less, high energy density is exhibited when driven at high voltage, so that high capacity characteristics can be implemented and high safety can be implemented.

The b is a molar ratio of cobalt (Co) among the total metals excluding lithium in the lithium composite transition metal oxide, and may be more than 0, 0.010 or more, 0.020 or more, 0.030 or more, 0.040 or more, 0.050 or more, or 0.060 or more, and may be 0.070 or less, 0.080 or less, 0.090 or less, 0.100 or less, 0.110 or less, 0.120 or less, 0.130 or less, 0.140 or less, 0.150 or less, 0.160 or less, 0.170 or less, 0.180 or less, 0.190 or less, 0.200 or less, 0.210 or less, 0.220 or less, 0.230 or less, 0.240 or less, 0.250 or less, 0.260 or less, 0.270 or less, 0.280 or less, 0.290 or less, 0.300 or less, 0.310 or less, 0.320 or less, 0.330 or less, 0.340 or less, 0.350 or less, 0.360 or less, 0.370 or less, 0.380 or less, 0.390 or less, 0.400 or less, 0.410 or less, 0.420 or less, 0.430 or less, 0.440 or less, 0.450 or less, 0.460 or less, 0.470 or less, 0.480 or less, 0.490 or less, or less than 0.500. When the b satisfies the above range, the stability can be improved during the charge and discharge process, and the rate characteristics can be enhanced.

The c is a molar ratio of manganese (Mn) among the total metals excluding lithium in the lithium composite transition metal oxide, and may be more than 0, 0.010 or more, 0.020 or more, 0.030 or more, 0.040 or more, 0.050 or more, 0.060 or more, 0.070 or more, 0.080 or more, 0.090 or more, 0.100 or more, 0.110 or more, 0.120 or more, 0.130 or more, 0.140 or more, 0.150 or more, 0.160 or more, 0.170 or more, 0.180 or more, 0.190 or more, 0.200 or more, 0.210 or more, 0.220 or more, 0.230 or more, 0.240 or more, 0.250 or more, 0.260 or more, 0.270 or more, 0.280 or more, 0.290 or more, 0.300 or more, or 0.310 or more, and may be 0.320 or less, 0.330 or less, 0.340 or less, 0.350 or less, 0.360 or less, 0.370 or less, 0.380 or less, 0.390 or less, 0.400 or less, 0.410 or less, 0.420 or less, 0.430 or less, 0.440 or less, 0.450 or less, 0.460 or less, 0.470 or less, 0.480 or less, 0.490 or less, or less than 0.500. When the c satisfies the above range, high temperature stability can be increased, and side reactions with the electrolyte can be relatively reduced.

The d is a molar ratio of $M^1$ among the total metals excluding lithium in the lithium composite transition metal oxide, and may be 0 or more, or 0.010 or more, and may be 0.020 or less, 0.030 or less, 0.040 or less, 0.050 or less, 0.060 or less, 0.070 or less, 0.080 or less, 0.090 or less, or 0.100 or less. When the d satisfies the above range, the stability of the crystal structure of the positive electrode active material can be enhanced, and the grain shape can be improved.

According to one embodiment of the present invention, the lithium composite transition metal oxide may include at least one doping element selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si, that is, i.e., may be doped with the doping element. In this case, the stability of the crystal structure of the positive electrode active material can be enhanced, and the grain shape can be improved.

According to one embodiment of the present invention, the average particle diameter ($D_{50}$) of the primary particles may be 2.35 $\mu$m or more and 6 $\mu$m or less. Specifically, the average particle diameter ($D_{50}$) of the primary particles may be 2.35 $\mu$m or more, or 2.40 $\mu$m or more, and may be 3.10 $\mu$m or less, 3.20 $\mu$m or less, 3.30 $\mu$m or less, 3.40 $\mu$m or less, 3.50 $\mu$m or less, 3.60 $\mu$m or less, 3.70 $\mu$m or less, 3.80 $\mu$m or less, 3.90 $\mu$m or less, 4.00 $\mu$m or less, 4.10 $\mu$m or less, 4.20 $\mu$m or less, 4.30 $\mu$m or less, 4.40 $\mu$m or less, 4.50 $\mu$m or less, 4.60 $\mu$m or less, 4.70 $\mu$m or less, 4.80 $\mu$m or less, 4.90 $\mu$m or less, 5.00 $\mu$m or less, 5.10 $\mu$m or less, 5.20 $\mu$m or less, 5.30 $\mu$m or less, 5.40 $\mu$m or less, 5.50 $\mu$m or less, 5.60 $\mu$m or less, 5.70 $\mu$m or less, 5.80 $\mu$m or less, 5.90 $\mu$m or less, or 6.00 $\mu$m or less. When the average particle diameter ($D_{50}$) is within the above range, excellent electrode density can be implemented, and structural stability can be improved.

## Method of Manufacturing Positive Electrode Active Material

Next, a method of manufacturing the positive electrode active material of the present invention will be described. The positive electrode active material manufacturing method of the present invention is a method of manufacturing the positive electrode active material according to the present invention.

The positive electrode active material according to the present invention may be manufactured through Manufacturing Method 1 or Manufacturing Method 2 described below. Hereinafter, each of Manufacturing Method 1 and Manufacturing Method 2 will be described in detail.

<Manufacturing Method 1>

Manufacturing Method 1 of the positive electrode active material according to the present invention comprises the steps of: (A1) mixing a composite transition metal hydroxide and a lithium-containing raw material to prepare a mixture; and (B1) calcining the mixture to prepare a lithium composite transition metal oxide, wherein the method is performed under conditions satisfying Equation 2 below:

[Equation 2]

$$30.30 \leq (0.055 \times T1) - (20 \times P1) \leq 31.00$$

wherein P1 is a molar ratio (Li/M) of lithium (Li) present in the lithium-containing raw material to the transition metal (M) present in the composite transition metal hydroxide in the step (A1), and T1 is a calcination temperature in the step (B1).

The positive electrode active material according to the present invention described above may be manufactured by appropriately adjusting the type of the raw material, the calcination temperature, the calcination atmosphere, etc.

Hereinafter, each step of the present invention will be described in detail.

### Step (A1)

The method for manufacturing the positive electrode active material according to the present invention comprises step (A1) of mixing a composite transition metal hydroxide and a lithium-containing raw material to prepare a mixture.

The composite transition metal hydroxide may be prepared by introducing a composite transition metal-containing solution, an ammonium cation complex forming agent, and a basic compound into a reactor and performing a coprecipitation reaction.

The composite transition metal-containing solution may contain nickel (Ni), cobalt (Co), and manganese (Mn).

The composite transition metal-containing solution may be prepared by dissolving a transition metal-containing raw material in a solvent such as water, and for example, may be prepared by dissolving a nickel (Ni)-containing raw material, a cobalt (Co)-containing raw material, and a manganese (Mn)-containing raw material in water. That is, the composite transition metal-containing solution may contain a nickel (Ni)-containing raw material, a cobalt (Co)-containing raw material, and a manganese (Mn)-containing raw material. In addition, if necessary, the composite transition metal-containing solution may further include a metal-containing raw material containing a transition metal other than nickel (Ni), cobalt (Co) and manganese (Mn) (for example, at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si).

The nickel (Ni)-containing raw material may be at least one selected from the group consisting of nickel-containing acetate, nitrate, sulfate, halide, sulfide, hydroxide, oxide, oxyhydroxide, $NiSO_4$, $NiSO_4 \cdot 6H_2O$ $NiCO_3 \cdot$ $2Ni(OH)_2 \cdot 4H_2O$, $NiC_2O_4 \cdot 2H_2O$, $Ni(NO_3)_2 \cdot 6H_2O$, fatty acid nickel, and nickel halides, and one or a mixture of two or more thereof may be used. Specifically, as the nickel (Ni)-containing raw material, $NiSO_4 \cdot 6H_2O$ may be used in consideration of the ease of manufacturing process, such as pH control and solubility, and economic feasibility.

The cobalt (Co)-containing raw material may be at least one selected from the group consisting of cobalt-containing acetate, nitrate, sulfate, halide, sulfide, hydroxide, oxide, oxyhydroxide, $Co(OCOCH_3)_2 \cdot 4H_2O$, $Co(NO_3)_2 \cdot 6H_2O$, $Co(SO_4)_2 \cdot 7H_2O$, fatty acid cobalt, and cobalt halides, and one or a mixture of two or more thereof may be used. Specifically, as the cobalt (Co)-containing raw material, $Co(SO_4)_2 \cdot 7H_2O$ may be used in consideration of the ease of manufacturing process, such as pH control and solubility, and economic feasibility.

The manganese (Mn)-containing raw material may be at least one selected from the group consisting of manganese-containing acetate, nitrate, sulfate, halide, sulfide, hydroxide, oxide, oxyhydroxide, $MnSO_4 \cdot H_2O$, $MnCO_3$, manganese dicarboxylate, manganese citrate, manganese salt of fatty acid manganese, and halide of manganese chloride, and one or a mixture of two or more thereof may be used. As the manganese (Mn)-containing raw material, $MnSO_4 \cdot H_2O$ may be used in consideration of the ease of manufacturing process, such as pH control and solubility, and economic feasibility.

The nickel (Ni)-containing raw material, the cobalt (Co)-containing raw material, and the manganese (Mn)-containing raw material may be used in an appropriate amount in consideration of the content of each metal element in the prepared composite transition metal hydroxide.

Meanwhile, the ammonium cation complex forming agent may include at least one compound selected from the group consisting of $NH_4OH$, $(NH_4)_2SO_4$, $NH_4NO_3$, $NH_4Cl$, $CH_3COONH_4$, and $NH_4CO_3$, and may be introduced into a reactor in the form of a solution in which the compound is dissolved in a solvent. In this case, the solvent may be water, or a mixture of water and an organic solvent (specifically, alcohol, etc.) that is uniformly miscible with water.

The basic compound may be at least one compound selected from the group consisting of NaOH, KOH, and $Ca(OH)_2$, and may be introduced into a reactor in the form of a solution in which the compound is dissolved in a solvent. In this case, the solvent may be water, or a mixture of water and an organic solvent (specifically, alcohol, etc.) that is uniformly miscible with water.

As described above, when the composite transition metal-containing solution, the ammonium cation complex forming agent, and the basic compound are introduced into a reactor, precursor particles in the form of a composite transition metal hydroxide are produced due to a coprecipitation reaction between the transition metal ions in the composite transition metal-containing solution and the hydroxide ions of the basic compound.

The coprecipitation reaction may be performed for 12 hours or more and 100 hours or less. When the coprecipitation reaction is performed for a time within the above range, particles having a uniform particle size and shape can be generated.

In this case, the basic compound may be introduced in an amount such that the pH of the reaction solution becomes a desired range.

When the precursor particles are formed by the above method, the particles are separated from the reaction solution to obtain a composite transition metal precursor. Specifically, the reaction solution is filtered to separate the composite transition metal precursor from the reaction solution, and then the separated composite transition metal precursor is washed and dried to obtain a composite transition metal precursor. In this case, if necessary, processes such as pulverization and/or classification may be performed.

According to one embodiment of the present invention, the composite transition metal hydroxide may have a composition represented by Chemical Formula 2 below:

$$[\text{Chemical Formula 2}] \qquad Ni_{a1}Co_{b1}Mn_{c1}M^2_{d1}(OH)_2$$

wherein:

$M^2$ is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si, and

$0.50 \leq a1 < 1.00$, $0 < b1 < 0.50$, $0 < c1 < 0.50$, $0 \leq d1 \leq 0.10$, and $a1 + b1 + c1 + d1 = 1$.

The $M^2$ is a doping element, and specifically, may be at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si. The $M^2$ is not necessarily included, but when included in an appropriate amount, the particle shape of the positive electrode active material can be improved, and the stability of the crystal structure can be enhanced.

The $a1$ is a molar ratio of nickel (Ni) among the total metals excluding lithium in the lithium composite transition metal oxide, and may be 0.50 or more, 0.51 or more, 0.52 or more, 0.53 or more, 0.54 or more, 0.55 or more, 0.56 or more, 0.57 or more, 0.58 or more, 0.59 or more, 0.60 or more, or 0.61 or more, and may be 0.62 or less, 0.63 or less, 0.64 or less, 0.65 or less, 0.66 or less, 0.67 or less, 0.68 or less, 0.69 or less, 0.70 or less, 0.71 or less, 0.72 or less, 0.73 or less, 0.74 or less, 0.75 or less, 0.76 or less, 0.77 or less, 0.78 or less, 0.79 or less, 0.80 or less, 0.81 or less, 0.82 or less, 0.83 or less, 0.84 or less, 0.85 or less, 0.86 or less, 0.87 or less, 0.88 or less, 0.89 or less, 0.9 or less, 0.91 or less, 0.92 or less, 0.93 or less, 0.94 or less, 0.95 or less, 0.96 or less, 0.97 or less, 0.98 or less, 0.99 or less, or less than 1.00. When the a1 satisfies the above range, high energy characteristics can be implemented, and in particular, when the a1 is 0.60 or more and 0.70 or less, high energy density is exhibited when driven at high voltage, so that high capacity characteristics can be implemented and high safety can be implemented.

The b1 is a molar ratio of cobalt (Co) among the total metals excluding lithium in the lithium composite transition metal oxide, and may be more than 0, 0.01 or more, 0.02 or more, 0.03 or more, 0.04 or more, 0.05 or more, or 0.06 or more, and may be 0.07 or less, 0.08 or less, 0.09 or less, 0.10 or less, 0.11 or less, 0.12 or less, 0.13 or less, 0.14 or less, 0.15 or less, 0.16 or less, 0.17 or less, 0.18 or less, 0.19 or less, 0.20 or less, 0.21 or less, 0.22 or less, 0.23 or less, 0.24 or less, 0.25 or less, 0.26 or less, 0.27 or less, 0.28 or less, 0.29 or less, 0.30 or less, 0.31 or less, 0.32 or less, 0.33 or less, 0.34 or less, 0.35 or less, 0.36 or less, 0.37 or less, 0.38 or less, 0.39 or less, 0.40 or less, 0.41 or less, 0.42 or less, 0.43 or less, 0.44 or less, 0.45 or less, 0.46 or less, 0.47 or less, 0.48 or less, 0.49 or less, or less than 0.50. When the b1 satisfies the above range, the stability can be improved during the charge and discharge process, and the rate characteristics can be enhanced.

The c1 is a molar ratio of manganese (Mn) among the total metals excluding lithium in the lithium composite transition metal oxide, and may be more than 0, 0.01 or more, 0.02 or more, 0.03 or more, 0.04 or more, 0.05 or more, 0.06 or more, 0.07 or more, 0.08 or more, 0.09 or more, 0.10 or more, 0.11 or more, 0.12 or more, 0.13 or more, 0.14 or more, 0.15 or more, 0.16 or more, 0.17 or more, 0.18 or more, 0.19 or more, 0.20 or more, 0.21 or more, 0.22 or more, 0.23 or more, 0.24 or more, 0.25 or more, 0.26 or more, 0.27 or more, 0.28 or more, 0.29 or more, 0.30 or more, or 0.31 or more, and may be 0.32 or less, 0.33 or less, 0.34 or less, 0.35 or less, 0.36 or less, 0.37 or less, 0.38 or less, 0.39 or less, 0.40 or less, 0.41 or less, 0.42 or less, 0.43 or less, 0.44 or less, 0.45 or less, 0.46 or less, 0.47 or less, 0.48 or less, 0.49 or less, or less than 0.50. When the c1 satisfies the above range, high temperature stability can be increased, and side reactions with the electrolyte can be relatively reduced.

The d1 is a molar ratio of $M^1$ among the total metals excluding lithium in the lithium composite transition metal oxide, and may be 0 or more, or 0.01 or more, and may be 0.02 or less, 0.03 or less, 0.04 or less, 0.05 or less, 0.06 or less, 0.07 or less, 0.08 or less, 0.09 or less, or 0.10 or less. When the d1 satisfies the above range, the stability of the crystal structure of the positive electrode active material can be enhanced, and the grain shape can be improved.

The lithium (Li)-containing raw material may be at least one selected from the group consisting of LiOH, $Li_2CO_3$, $LiNO_3$, $LiNO_2$, $LiOH \cdot H_2O$, LiH, LiF, LiCl, LiBr, LiI, $CH_3COOLi$, $Li_2O$, Li acetate, Li dicarboxylate, Li citrate, Li fatty acid, alkyl lithium, and lithium halides, and one or a mixture of two or more thereof may be used. Specifically, $Li_2CO_3$ may be used as the lithium (Li)-containing raw material in consideration of economic feasibility.

The mixing may be performed by dry mixing or wet mixing. When each component is mixed through the dry mixing, the calcination process may be performed without a separate drying process. When each component is mixed through the wet mixing, it may be added to a solvent, specifically water, or a mixture of water and an organic solvent (specifically alcohol, etc.) that can be uniformly mixed with water, to prepare a mixture. Alternatively, a solution, specifically an aqueous solution, containing each raw material, may be prepared and then mixed, and the mixed components are spray-dried and then subjected to a calcination process. Each of the raw material and the composite transition metal hydroxide may be used in an appropriate amount considering the content of each metal element in the lithium composite transition metal oxide to be finally manufactured.

According to one embodiment of the present invention, in the step (A1), the composite transition metal hydroxide and the lithium (Li)-containing raw material may be mixed in an amount such that they have a composition represented by Chemical Formula 1 above.

According to one embodiment of the present invention, the composite transition metal hydroxide and the lithium-containing raw material may be mixed so that a molar ratio (Li/M) of lithium (Li) present in the lithium-containing raw material to a transition metal (M) present in the composite transition metal hydroxide is 1.00 or more and 1.10 or less. Specifically, they may be mixed so that the molar ratio (Li/M) of the lithium (Li) present in the lithium-containing raw material to the transition metal (M) present in the composite transition metal hydroxide is 1.00 or more, 1.01 or more, 1.02 or more, 1.03 or more, 1.04 or more, 1.05 or more, or 1.06 or more, and 1.07 or less, 1.08 or less, 1.09 or less, or 1.10 or less. When they are mixed so that the molar ratio (Li/M) of the lithium (Li) present in the lithium-containing raw material to the transition metal (M) present in the composite transition metal hydroxide is within the above range, the shape of the single particle can be adjusted to improve the capacity characteristics, resistance characteristics, and rate characteristics. In particular, when the molar ratio (Li/M) is 1.02 or more and 1.07 or less, the amount of lithium required for the reaction is sufficient and the amount of residual lithium after the reaction is small, so that the capacity characteristics, resistance characteristics, and rate characteristics of the secondary battery manufactured therefrom are improved.

**Step (B1)**

The method for manufacturing the positive electrode active material according to the present invention includes, after the step (A1), a step (B1) of preparing a lithium composite transition metal oxide by calcining the mixture.

According to one embodiment of the present invention, the calcination may be performed at a temperature of 700°C or higher and 1,000°C or lower. Specifically, the calcination may be performed at a temperature of 700°C or more, 710°C or more, 720°C or more, 730°C or more, 740°C or more, 750°C or more, 760°C or more, 770°C or more, 780°C or more, 790°C or more, 800°C or more, 810°C or more, 820°C or more, 830°C or more, 840°C or more, 850°C or more, 860°C or more, 870°C or more, 880°C or more, 890°C or more, 900°C or more, 910°C or more, 920°C or more, or 930°C or more, and 940°C or less, 950°C or less, 960°C or less, 970°C or less, 980°C or less, 990°C or less, or 1,000°C or less. When the calcination temperature is within the above range, it is easy to adjust the particle size and specific surface area of the positive electrode active material, and the capacity characteristics and resistance characteristics of the secondary battery to which it is applied can be improved.

According to one embodiment of the present invention, the calcination may be performed for 5 hours or more and 20 hours or less. Specifically, the calcination may be performed for 5 hours or more, 6 hours or more, 7 hours or more, or 8 hours or more, and 9 hours or less, 10 hours or less, 11 hours or less, 12 hours or less, 13 hours or less, 14 hours or less, 15 hours or less, 16 hours or less, 17 hours or less, 18 hours or less, 19 hours or less, or 20 hours or less. When the calcination time is within the above range, a positive electrode active material having a layered structure and excellent structural stability can be manufactured, and the particle diameter of the positive electrode active material can be grown to an appropriate degree. The calcination may be performed while maintaining the calcination temperature during the above calcination time.

Manufacturing Method 1 of the positive electrode active material according to the present invention is performed under conditions satisfying Equation 2 below:

$$[\text{Equation 2}]$$

$$30.3 \leq (0.055 \times T1) - (20 \times P1) \leq 31.0$$

wherein:
P1 is a molar ratio (Li/M) of lithium (Li) present in the lithium-containing raw material to the transition metal (M) present in the composite transition metal hydroxide in the step (A1), and T1 is a calcination temperature in the step (B1).

The present inventors have found out a relationship between an average particle diameter ($D_{50}$) of primary particles and a calcination temperature, a relationship between an average particle diameter ($D_{50}$) of primary particles and a molar ratio (Li/M) of lithium (Li) present in a lithium-containing raw material to a transition metal (M) present in a composite transition metal hydroxide, and a relationship between a crystal grain size (D) and a calcination temperature, thereby finding out a method for manufacturing a positive electrode active material with improved output characteristics, rate characteristics, and resistance characteristics. Specifically, the present inventors have found that when the calcination temperature increases by about 10°C, the average particle diameter ($D_{50}$) of the primary particles increases by 0.55 μm; that when the molar ratio (Li/M) of lithium (Li) present in the lithium-containing raw material to the transition metal (M) present in the composite transition metal hydroxide increases by about 0.01, the average particle diameter ($D_{50}$) of the primary particles increases by 0.2 μm, and that when the calcination temperature increases, the crystal grain size (D) increases, thereby completing a method for manufacturing a positive electrode active material with improved output characteristics, rate characteristics, resistance characteristics, etc.

Equation 2 above, i.e., (0.055×T1)-(20×P1) (wherein P1 is a molar ratio (Li/M) of lithium (Li) present in the lithium-containing raw material to the transition metal (M) present in the composite transition metal hydroxide in the step (A1), T1 is a calcination temperature in the step (B1), and P and T are dimensionless numbers not including units) may be 30.3 or less, or 31.0 or less. Specifically, it may be more than 28.5, 29 or more, 29.1 or more, 29.2 or more, 29.3 or more, 29.4 or more, 29.5 or more, 29.6 or more, 29.7 or more, 29.8 or more, 29.9 or more, 30.0 or more, 30.1 or more, or 30.2 or more, and may be 30.3 or less, 30.4 or less, 30.5 or less, 30.6 or less, 30.7 or less, 30.8 or less, 30.9 or less, or 31.0 or less. When Equation 2 above satisfies the above range, it is possible to manufacture a positive electrode active material which is the form of a single particle composed of 10 or less primary particles, and has a lithium mobility improved by adjusting the average particle diameter of the primary particles and the size of the crystal grains. Meanwhile, when the value of Equation 2 above is less than 30.3, there is a problem that the interfaces between the crystal grains, which serve as paths for lithium ions to migrate inside the lithium composite transition metal oxide particles, is excessive, resulting in inferior lifespan characteristics. When the value of Equation 2 above is more than 31.0, there is a problem that the lithium mobility is low, and thus the output characteristics, rate characteristics, and resistance characteristics of the secondary battery are inferior because the interfaces between the crystal grains, which serve as paths for lithium ions to migrate inside the lithium composite transition metal oxide particles, is small.

<Manufacturing Method 2>

Manufacturing Method 2 of the positive electrode active material according to the present invention comprises the steps of: (A2) mixing a composite transition metal hydroxide and a lithium (Li)-containing raw material to prepare a mixture; (B2) calcining the mixture to produce a calcined product; and (C2) heat-treating the calcined product at a temperature of 400°C or higher and 900°C or lower to produce a lithium composite transition metal oxide, wherein the method is performed under conditions satisfying Equation 3 below:

$$[\text{Equation 3}]$$

$$26.0 \leq (0.055 \times T2) - (20 \times P2) \leq 31.5$$

wherein P2 is a molar ratio (Li/M) of lithium (Li) present in the lithium-containing raw material to the transition metal (M) present in the composite transition metal hydroxide in the step (A2), and T2 is a calcination temperature in the step (B2).

The positive electrode active material according to the present invention described above may be manufactured by appropriately adjusting the type of the raw material, the calcination temperature, the calcination atmosphere, etc.

**Step (A2)**

The method for manufacturing the positive electrode active material according to the present invention comprises step (A2) of mixing a composite transition metal hydroxide and a lithium-containing raw material to prepare a mixture.

Step (A2) may be performed in the same manner as step (A1) of Manufacturing Method 1 of the positive electrode active material, and since step (A1) of Manufacturing Method 1 of the positive electrode active material has been described above, a detailed description thereof will be omitted.

**Step (B2)**

The method for manufacturing the positive electrode active material according to the present invention includes, after the step (A2), a step (B2) of preparing a calcined product by calcining the mixture.

According to one embodiment of the present invention, the calcination may be performed at a temperature of 700°C or higher and 1,000°C or lower. Specifically, the calcination may be performed at a temperature of 700°C or more, 710°C or more, 720°C or more, 730°C or more, 740°C or more, 750°C or more, 760°C or more, 770°C or more, 780°C or more, 790°C or more, 800°C or more, 810°C or more, 820°C or more, 830°C or more, 840°C or more, 850°C or more, 860°C or more, 870°C or more, 880°C or more, 890°C or more, 900°C or more, 910°C or more, 920°C or more, or 930°C or more, and 940°C or less, 950°C or less, 960°C or less, 970°C or less, 980°C or less, 990°C or less, or 1,000°C or less. When the calcination temperature is within the above range, it is easy to adjust the particle size and specific surface area of the positive electrode active material, and the capacity characteristics and resistance characteristics of the secondary battery to which it is applied can be improved.

According to one embodiment of the present invention, the calcination may be performed for 5 hours or more and 20 hours or less. Specifically, the calcination may be performed for 5 hours or more, 6 hours or more, 7 hours or more, 8 hours or more, 9 hours or more, 10 hours or more, 11 hours or more, 12 hours or more, 13 hours or more, or 14 hours or more, and, 15 hours or less, 16 hours or less, 17 hours or less, 18 hours or less, 19 hours or less, or 20 hours or less. When the calcination time is within the above range, a positive electrode active material having a layered structure and excellent structural stability can be manufactured. In particular, when the time is 14 hours or more and 20 hours or less, the particle diameter of the positive electrode active material can be grown to an appropriate degree.

**Step (C2)**

The method for manufacturing the positive electrode active material according to the present invention includes, after the step (B2), the step (C2) of heat-treating the calcined product at a temperature of 400°C or higher and 900°C or lower.

By including the step (C2), the crystal grain size can be reduced. Accordingly, the lithium mobility of the positive electrode active material can be improved, and the output characteristics, rate characteristics, and resistance characteristics of the secondary battery to which it is applied can be improved. The heat treatment is a step distinguished from the step (B2), and the temperature of the heat treatment may be 50°C or more lower than the calcination temperature. Specifically, the heat treatment may be performed at a temperature of 400°C or higher, 500°C or higher, 600°C or higher, or 700°C or higher, and 800°C or lower, or 900°C or lower. When the heat treatment is within the above temperature range, the surface crystals can be stabilized, and the interface between the crystal grains can increase due to a decrease in the crystal grain size, thereby improving the lithium mobility, and improving the output characteristics, rate characteristics, and resistance characteristics of the secondary battery to which it is applied. When the heat treatment is 400°C or lower, the heat energy required for stabilizing the surface crystals is insufficient, so that the surface crystals are not sufficiently stabilized, and when the heat treatment is 900°C or higher, there is a problem that the crystal grain size does not decrease.

According to one embodiment of the present invention, the heat treatment may be performed for 2 hours or more and 10 hours or less. Specifically, the heat treatment may be performed for 2 hours or more, 3 hours or more, or 4 hours or more, and 5 hours or less, 6 hours or less, 7 hours or less, 8 hours or less, 9 hours or less, or 10 hours or less. When the time is within the above range, the surface crystals can be stabilized, and the interface between the crystal grains can increase due to a decrease in the crystal grain size, thereby improving the lithium mobility, and improving the output characteristics, rate characteristics, and resistance characteristics of the secondary battery to which it is applied.

Manufacturing Method 2 of the positive electrode active material according to the present invention is performed under conditions satisfying Equation 3 below:

[Equation 3]

$$26.0 \leq (0.055 \times T2) - (20 \times P2) \leq 31.5$$

wherein:

P2 is a molar ratio (Li/M) of lithium (Li) present in the lithium-containing raw material to the transition metal (M) present in the composite transition metal hydroxide in the step (A2), and T2 is a calcination temperature in the step (B2).

Equation 3 above, i.e., $(0.055 \times T2) - (20 \times P2)$ (wherein P2 is a molar ratio (Li/M) of lithium (Li) present in the lithium-containing raw material to the transition metal (M) present in the composite transition metal hydroxide in the step (A2), T2 is a calcination temperature in the step (B2), and P and T are dimensionless numbers not including units) may be 26.0 or more and 31.5 or less. Specifically, it may be 26.0 or more, 26.5 or more, 27.0 or more, 27.5 or more, 28.0 or more, 28.5 or more, 29.0 or more, 29.1 or more, 29.2 or more, 29.3 or more, 29.4 or more, 29.5 or more, 29.6 or more, 29.7 or more, 29.8 or more, 29.9 or more, 30.0 or more, 30.1 or more, 30.2 or more, 30.3 or more, 30.4 or more, 30.5 or more, 30.6 or more, 30.7 or more, 30.8 or more, 30.9 or more, or 31.0 or more, and may be 31.1 or less, 31.2 or less, 31.3 or less, 31.4 or less, or 31.5 or less. When Equation 3 above satisfies the above range, it is possible to manufacture a positive electrode active material which is the form of a single particle composed of 10 or less primary particles, and has a lithium mobility improved by adjusting the average particle diameter of the primary particles and the size of the crystal grains. On the other hand, when the step (C2) is not included and Equation 3 above is less than 26.0, there is a problem that the interfaces between the crystal grains, which serve as paths for lithium ions to migrate inside the lithium composite transition metal oxide particles, is excessive, resulting in inferior lifespan characteristics. When Equation 3 above is more than 31.5, there is a problem that the lithium mobility is low, and thus the output characteristics, rate characteristics, and resistance characteristics of the secondary battery are inferior because the interfaces between the crystal grains, which serve as paths for lithium ions to migrate inside the lithium composite transition metal oxide particles, is small.

## Positive Electrode

Next, a positive electrode according to the present invention will be described.

The positive electrode according to the present invention comprises a positive electrode active material layer including the positive electrode active material according to the present invention. Specifically, the positive electrode includes a positive electrode current collector and a positive electrode active material layer formed on the positive electrode current collector and including the positive electrode active material. Since the positive electrode active material has been described above, a detailed description thereof will be omitted, and only the remaining components will be described in detail below.

The positive electrode current collector is not particularly limited as long as it has conductivity without causing a chemical change in the battery, and may be, for example, stainless steel, aluminum, nickel, titanium, calcined carbon, or aluminum or stainless steel having a surface treated with carbon, nickel, titanium, silver, etc. In addition, the positive electrode current collector may typically have a thickness of 3 $\mu$m to 500 $\mu$m, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer may include, along with the positive electrode active material, a conductive material and a binder. In this case, the positive electrode active material may be included in an amount of 80% to 99% by weight, more specifically 85% to 98.5% by weight, based on the total weight of the positive electrode active material layer, and can exhibit excellent capacity characteristics within this range.

The conductive material is used to impart conductivity to the electrode, and may be any material without particular limitation as long as it has electroconductivity without causing a chemical change in a battery to be configured. Specific examples thereof may include graphite such as natural graphite or artificial graphite; carbon-based materials such as carbon black, acetylene black, Ketjen black, channel black, furnace black, lamp black, thermal black, and carbon fiber; a powder or fiber of metal such as copper, nickel, aluminum, silver, etc.; conductive whiskers such as zinc oxide and potassium titanate; conductive metal oxides such as titanium oxide; or conductive polymers such as a polyphenylene derivative, and any one or a mixture of two or more thereof may be used. The conductive material may be included in an amount of 0.1% by weight to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber (SBR), fluorine rubber, or various copolymers thereof, and any one or a mixture of two or more thereof may be used. The binder may be included in an amount of 0.1% by weight to 15% by weight based on the total weight of the positive electrode active material layer.

The positive electrode may be manufactured according to a conventional positive electrode manufacturing method except for the use of the positive electrode active material described above. Specifically, it may be manufactured by applying a composition for forming a positive electrode active material layer onto a positive electrode current collector, and then drying and rolling, wherein the composition is prepared by dissolving or dispersing the above-mentioned positive electrode active material and optionally, a binder and a conductive material in a solvent. The types and contents of the positive electrode active material, binder, and conductive material are as described above. Alternatively, the positive electrode may be manufactured by casting the composition for forming the positive electrode active material layer on a separate support, peeling a film from the support, and then laminating the film on a positive electrode current collector.

The solvent may be any solvent commonly used in the art, for example, dimethyl sulfoxide (DMSO), isopropyl alcohol, N-methyl pyrrolidone (NMP), acetone, water, or the like, and any one or a mixture of two or more thereof may be used. The solvent may be used in an amount sufficient to dissolve or disperse the positive electrode active material, conductive material, and binder in consideration of the application thickness of the slurry and the manufacturing yield, and to allow the slurry to have a viscosity capable of exhibiting excellent thickness uniformity when applied for the subsequent positive electrode production.

**Lithium Secondary Battery**

Next, a lithium secondary battery according to the present invention will be described.

The present invention may provide an electrochemical device including the positive electrode. The electrochemical device may be specifically a battery, a capacitor, etc., and more specifically, a lithium secondary battery.

Specifically, the lithium secondary battery includes a positive electrode, a negative electrode positioned opposite the positive electrode, and a separator and electrolyte interposed between the positive electrode and the negative electrode. Since the positive electrode is the same as described above, a detailed description thereof is omitted, and only the remaining components will be described in detail below.

In addition, the lithium secondary battery may optionally further include a battery container for accommodating an electrode assembly formed of the positive electrode, negative electrode, and separator, and a sealing member for sealing the battery container.

In the lithium secondary battery, the negative electrode includes a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of

3 to 500 μm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer optionally includes a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as $SiO_\beta$ $(0<\beta<2)$, $SnO_2$, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80% to 99% by weight based on the total weight of the negative electrode active material layer.

The binder is a component that assists in bonding between the conductive material, the active material, and the current collector, and may usually be added in an amount of 0.1% to 10% by weight based on the total weight of the negative electrode active material layer. Examples of the binder include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material is a component to further improve the conductivity of the negative electrode active material, and may be added in an amount of 10% by weight or less, specifically 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material may be dissolved or dispersed in a solvent to prepare a composition for forming a negative electrode active material layer, which may be applied on a negative electrode current collector and dried to produce the negative electrode active material layer. Alternatively, the negative electrode active material layer may be manufactured by casting the composition for forming a negative electrode active material layer on a separate support, peeling a film from the support, and then laminating the film on a negative electrode current collector.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic hydrocarbon group having 2 to 20 carbon atoms, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable. In this case, excellent electrolyte performance can be obtained by mixing the cyclic carbonate and the chain carbonate in a volume ratio of about 1:1 to about 1:9.

The lithium salt may be any compound without particular limitation as long as it can provide lithium ions used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like. The lithium salt is preferably used at a concentration ranging from 0.1 to 5.0 M, specifically, 0.1 to 3.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 10% by weight, specifically 0.1% to 5% by weight, based on the total weight of the electrolyte.

As described above, since the lithium secondary battery including the positive electrode active material according to the present invention exhibits excellent energy density, efficiency characteristics, resistance characteristics, rate characteristics, etc., it is useful in the field of portable devices such as mobile phones, laptop computers, digital cameras, and electric vehicles such as hybrid electric vehicle (HEV).

Accordingly, in accordance with another embodiment of the present invention, a battery module including the lithium secondary battery as a unit cell and a battery pack including the same are provided.

The battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

The external shape of the lithium secondary battery of the present invention is not particularly limited, but may be a cylindrical type using a can, a prismatic type, a pouch type, or a coin type.

The lithium secondary battery according to the present invention can not only be used in battery cells used as a power source for small devices, but can also be preferably used as a unit cell in medium to large-sized battery modules containing multiple battery cells.

Hereinafter, examples of the present invention will be described in detail so that those skilled in the art can easily implement the present invention. However, the present invention may be embodied in a variety of forms and is not limited to the examples described herein.

**Modes for Carrying Out the Invention**

**Examples and Comparative Examples**

**Example 1**

A composite transition metal hydroxide having a composition represented by $Ni_{0.62}Co_{0.06}Mn_{0.32}(OH)_2$ (product name: Nickel cobalt manganese hydroxide, average particle diameter: 3-4 $\mu$m, secondary particle), and $Li_2CO_3$ were mixed so that a molar ratio of (Ni+Co+Mn):Li was 1:1.07, and $ZrO_2$ and $Y_2O_3$ were mixed to prepare a mixture. In this case, the $ZrO_2$ was mixed so that the Zr content was 1,500 ppm relative to the total weight of $Ni_{0.62}Co_{0.06}Mn_{0.32}(OH)_2$, and the $Y_2O_3$ was mixed so that the Y content was 3,000 ppm with relative to the total weight of $Ni_{0.62}Co_{0.06}Mn_{0.32}(OH)_2$.

The mixture was calcined at a temperature of 940°C under an atmospheric atmosphere for 9 hours to manufacture a lithium composite transition metal oxide (positive electrode active material).

**Example 2**

A composite transition metal hydroxide having a composition represented by $Ni_{0.62}Co_{0.06}Mn_{0.32}(OH)_2$ (product name: Nickel cobalt manganese hydroxide, average particle diameter: 3-4 μm, secondary particle), and $Li_2CO_3$ were mixed so that a molar ratio of (Ni+Co+Mn):Li was 1:1.06, and $ZrO_2$ and $Y_2O_3$ were mixed to prepare a mixture. In this case, the $ZrO_2$ was mixed so that the Zr content was 1,500 ppm relative to the total weight of $Ni_{0.62}Co_{0.06}Mn_{0.32}(OH)_2$, and the $Y_2O_3$ was mixed so that the Y content was 3,000 ppm with relative to the total weight of $Ni_{0.62}Co_{0.06}Mn_{0.32}(OH)_2$.
The mixture was calcined at a temperature of 950°C under an atmospheric atmosphere for 14 hours to produce a calcined product, which was then heat-treated at a temperature of 800°C under an atmospheric atmosphere for 4 hours to manufacture a lithium composite transition metal oxide (positive electrode active material).

**Comparative Example 1**

A composite transition metal hydroxide having a composition represented by $Ni_{0.62}Co_{0.06}Mn_{0.32}(OH)_2$ (product name: Nickel cobalt manganese hydroxide, average particle diameter: 3-4 μm, secondary particle), and $Li_2CO_3$ were mixed so that a molar ratio of (Ni+Co+Mn):Li was 1:1.06, and $ZrO_2$ and $Y_2O_3$ were mixed to prepare a mixture. In this case, the $ZrO_2$ was mixed so that the Zr content was 1,500 ppm relative to the total weight of $Ni_{0.62}Co_{0.06}Mn_{0.32}(OH)_2$, and the $Y_2O_3$ was mixed so that the Y content was 3,000 ppm with relative to the total weight of $Ni_{0.62}Co_{0.06}Mn_{0.32}(OH)_2$.
The mixture was calcined at a temperature of 950°C under an atmospheric atmosphere for 9 hours to manufacture a lithium composite transition metal oxide (positive electrode active material).

**Comparative Example 2**

A composite transition metal hydroxide having a composition represented by $Ni_{0.62}Co_{0.06}Mn_{0.32}(OH)_2$ (product name: Nickel cobalt manganese hydroxide, average particle diameter: 3-4 μm, secondary particle), and $Li_2CO_3$ were mixed so that a molar ratio of (Ni+Co+Mn):Li was 1:1.04, and $ZrO_2$ and $Y_2O_3$ were mixed to prepare a mixture. In this case, the $ZrO_2$ was mixed so that the Zr content was 1,500 ppm relative to the total weight of $Ni_{0.62}Co_{0.06}Mn_{0.32}(OH)_2$, and the $Y_2O_3$ was mixed so that the Y content was 3,000 ppm with relative to the total weight of $Ni_{0.62}Co_{0.06}Mn_{0.32}(OH)_2$.
The mixture was calcined at a temperature of 960°C under an atmospheric atmosphere for 9 hours to manufacture a lithium composite transition metal oxide (positive electrode active material).

**Comparative Example 3**

The calcined product in Example 2 was used as a positive electrode active material in Comparative Example 3.

**Comparative Example 4**

A composite transition metal hydroxide having a composition represented by $\mathbf{Ni_{0.62}Co_{0.06}Mn_{0.32}(OH)_2}$ (product name: Nickel cobalt manganese hydroxide, average particle diameter: 3-4 μm, secondary particle), and $Li_2CO_3$ were mixed so that a molar ratio of (Ni+Co+Mn):Li was 1:1.06, and $ZrO_2$ and $Y_2O_3$ were mixed to prepare a mixture. In this case, the $ZrO_2$ was mixed so that the Zr content was 1,500 ppm relative to the total weight of $Ni_{0.62}Co_{0.06}Mn_{0.32}(OH)_2$, and the $Y_2O_3$ was mixed so that the Y content was 3,000 ppm with relative to the total weight of $Ni_{0.62}Co_{0.06}Mn_{0.32}(OH)_2$.
The mixture was calcined at a temperature of 909°C under an atmospheric atmosphere for 9 hours to manufacture a lithium composite transition metal oxide (positive electrode active material).

[Table 1]

|  | Temperature (°C) | Li/M | Whether Step (C2) was performed or not | (0.055×Temperature)-(20×Li/M) |
|---|---|---|---|---|
| Example 1 | 940 | 1.07 | X | 30.30 |
| Example 2 | 950 | 1.06 | O | 31.05 |
| Comparative Example 1 | 950 | 1.06 | X | 31.05 |
| Comparative Example 2 | 960 | 1.04 | X | 32.00 |
| Comparative Example 3 | 950 | 1.06 | X | 31.05 |
| Comparative Example 4 | 909 | 1.06 | X | 28.80 |

**Experimental Example**

**Experimental Example 1: ICP Analysis**

0.1 g of each of the positive electrode active materials manufactured in Examples 1 to 2 and Comparative Examples 1 to 4 was taken, and 1 ml of hydrochloric acid was added thereto and heated to dissolve the positive electrode active material. Thereafter, a small amount of hydrogen peroxide was added to accelerate the reaction to completely dissolve the positive electrode active material, thereby preparing a solution. Subsequently, an analysis sample was prepared by diluting the solution with deionized water so that the total volume of the solution became 10 ml. The weight ratio of the constituent elements present in the analysis sample was measured using an ICP device (ICP-OES; Agilent 5100, Agilent Technologies), and the composition of the positive electrode active material and the content of $M^1$ (ppm) were shown in Table 2 below.

[Table 2]

| | Composition | Content of Zr (ppm) | Content of Y (ppm) |
|---|---|---|---|
| Example 1 | $Li_{1.07}Ni_{0.619}Co_{0.060}Mn_{0.317}Zr_{0.001}Y_{0.003}O_2$ | 1,370 | 2,710 |
| Example 2 | $Li_{1.06}Ni_{0.619}Co_{0.060}Mn_{0.317}Zr_{0.001}Y_{0.003}O_2$ | 1,350 | 2,690 |
| Comparative Example 1 | $Li_{1.06}Ni_{0.620}Co_{0.060}Mn_{0.316}Zr_{0.001}Y_{0.003}O_2$ | 1,350 | 2,730 |
| Comparative Example 2 | $Li_{1.04}Ni_{0.625}Co_{0.050}Mn_{0.321}Zr_{0.001}Y_{0.003}O_2$ | 1,340 | 2,740 |
| Comparative Example 3 | $Li_{1.07}Ni_{0.619}Co_{0.060}Mn_{0.317}Zr_{0.001}Y_{0.003}O_2$ | 1,360 | 2,680 |
| Comparative Example 4 | $Li_{1.07}Ni_{0.619}Co_{0.060}Mn_{0.317}Zr_{0.001}Y_{0.003}O_2$ | 1,350 | 2,700 |

Through Table 2 above, it was confirmed that the lithium composite transition metal oxides manufactured in Examples 1 and 2 had a composition represented by Chemical Formula 1 above and included doping elements Zr and Y.

**Experimental Example 2: Analysis of Single Crystallinity**

**Measurement of Average Particle Diameter of Primary Particles**

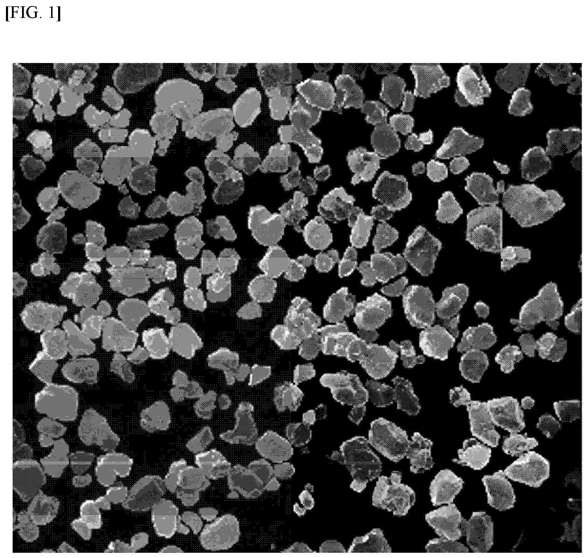

SEM images (5K magnification) of the positive electrode active materials manufactured in Examples 1 to 2 and Comparative Examples 1 to 4 were obtained using SEM (FEI, Inspect F), and an image processing program (DX program, LG Chemical) was used to divide the boundaries of the primary particles present in the SEM images to obtain images represented in random colors. The images were shown in FIGS. 1 to 6 below. The area of each primary particle was calculated through the number of pixels corresponding to each of n primary particles (an average of 50,000 or more primary particles) using the images obtained by dividing the boundaries of the primary particles and displaying them in random colors, and the average particle diameter ($D_{50}$) of the primary particles present in the positive electrode active materials manufactured in Examples 1 and 2 and Comparative Examples 1 to 4 was measured using the radius of a circle having the same area as the area of each primary particle, and the results were shown in Table 3 below.

FIG. 1 is a SEM image of a positive electrode active material manufactured in Example 1.

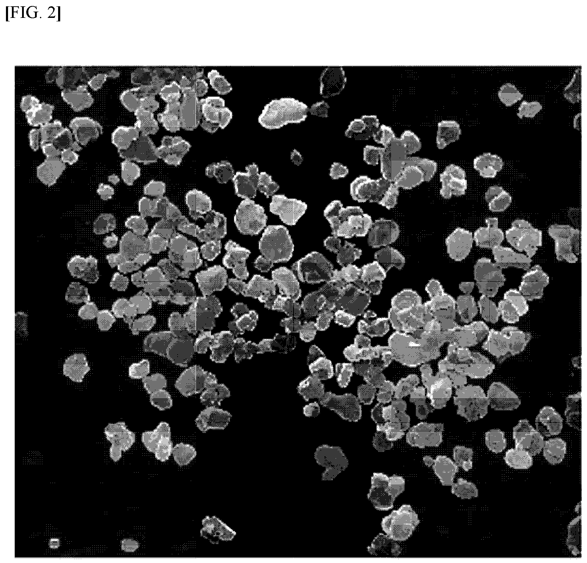

FIG. 2 is a SEM image of a positive electrode active material manufactured in Example 2.

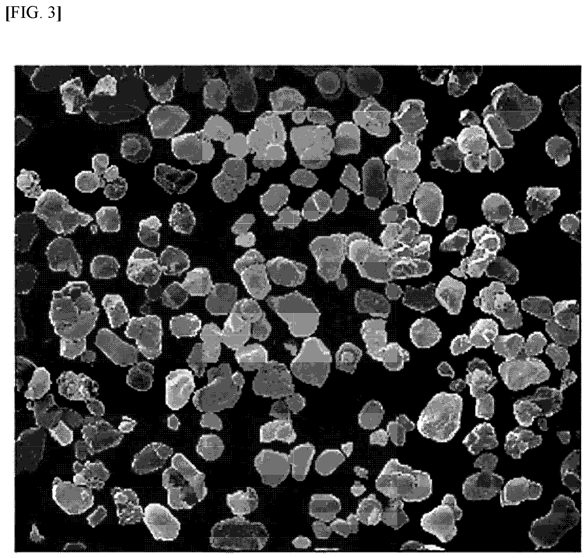

FIG. 3 is a SEM image of a positive electrode active material manufactured in Comparative Example 1.

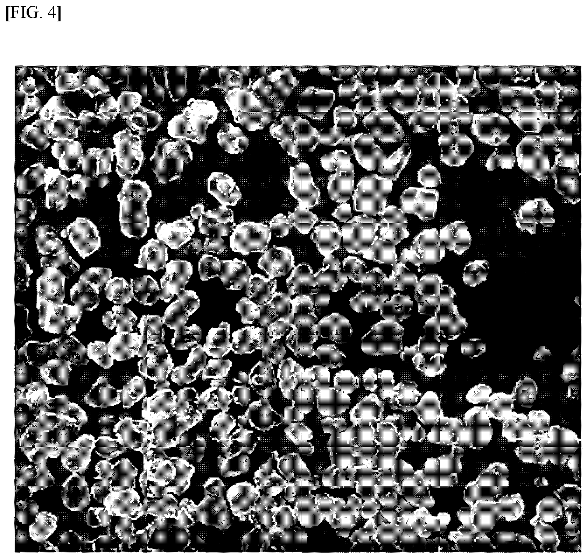

FIG. 4 is a SEM image of a positive electrode active material manufactured in Comparative Example 2.

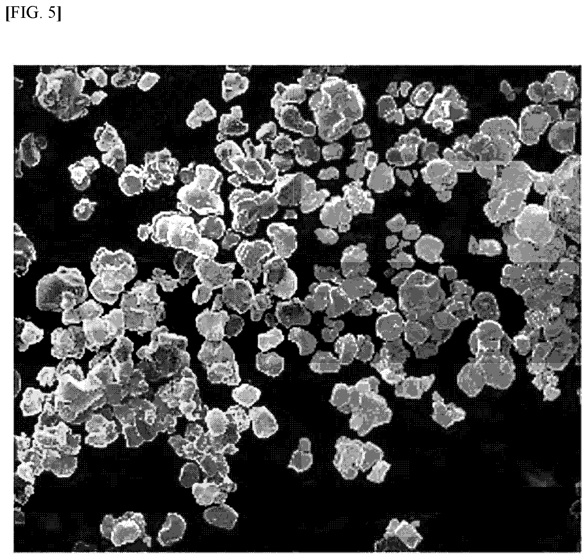

FIG. 5 is a SEM image of a positive electrode active material manufactured in Comparative Example 3.

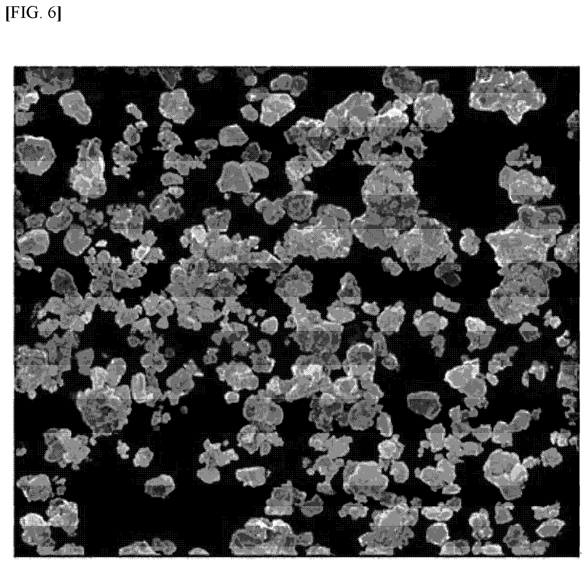

FIG. 6 is a SEM image of a positive electrode active material manufactured in Comparative Example 4.

**Measurement of Crystal Grain Size (D)**

For each of the positive electrode active materials manufactured in Examples 1 and 2 and Comparative Examples 1 to 4, 95 wt% of the positive electrode active material, 2.0 wt% of carbon black as a conductive material, and 3.0 wt% of polyvinylidene fluoride (PVDF) as a binder were mixed in an N-methylpyrrolidone (NMP) solvent to prepare a positive electrode slurry. The prepared positive electrode slurry was coated on one surface of an aluminum current collector, dried at 130°C to prepare a positive electrode for EBSD analysis. Rolling was not performed in the manufacture of the positive electrode.

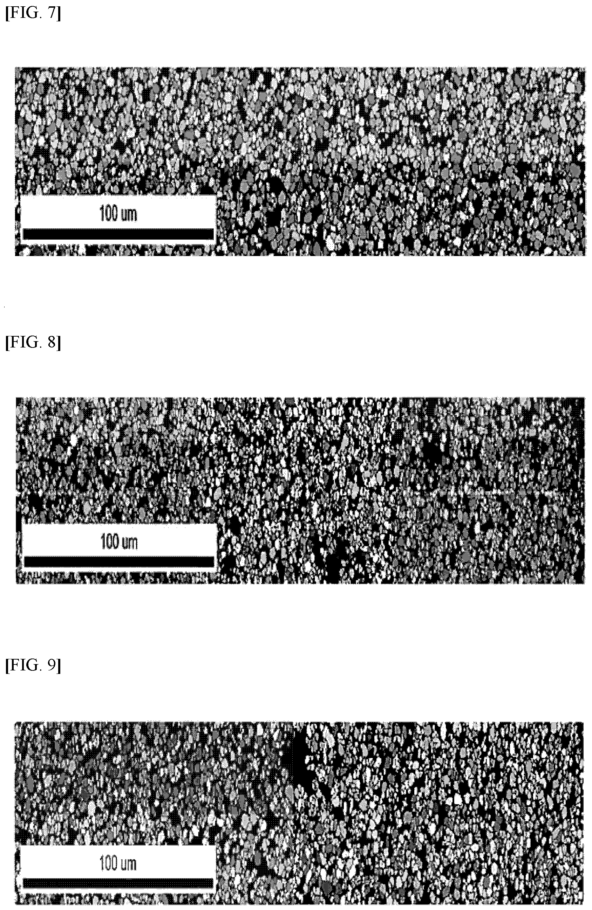

The cross section of the positive electrode was cut using an ion milling device (HITACHI IM-400, acceleration voltage of 6 kV), and the EBSD analysis of the cross-section of the positive electrode was performed using an FE-SEM (FEI, QuantaFEG 250) equipped with a backscatter electron diffraction pattern analyzer (EBSD) to obtain an IPF map, which was shown in FIGS. 7 to 12 below.

The EBSD analysis was performed with a scale having a crystal grain size of more than about 0.5 $\mu$m under the conditions of an acceleration voltage of 20 kV and a W.D. of 16 mm.

The particle diameter of the crystal grain was calculated by the area of the crystal grains confirmed in the IFP map image, and then the arithmetic average value thereof was obtained to measure the crystal grain size (D), which was shown in Table 3 below.

In addition, the average particle diameter ($D_{50}$) of the primary particles and the size (D) of the crystal grains were substituted into Equation 1 described herein to calculate the single crystallinity ($\chi$), which was shown in Table 3 below.

FIG. 7 is an IPF map obtained by EBSD analysis of a positive electrode for EBSD analysis manufactured using the positive electrode active material manufactured in Example 1.

FIG. 8 is an IPF map obtained by EBSD analysis of a positive electrode for EBSD analysis manufactured using the positive electrode active material manufactured in Example 2.

FIG. 9 is an IPF map obtained by EBSD analysis of a positive electrode for EBSD analysis manufactured using the positive electrode active material manufactured in Comparative Example 1.

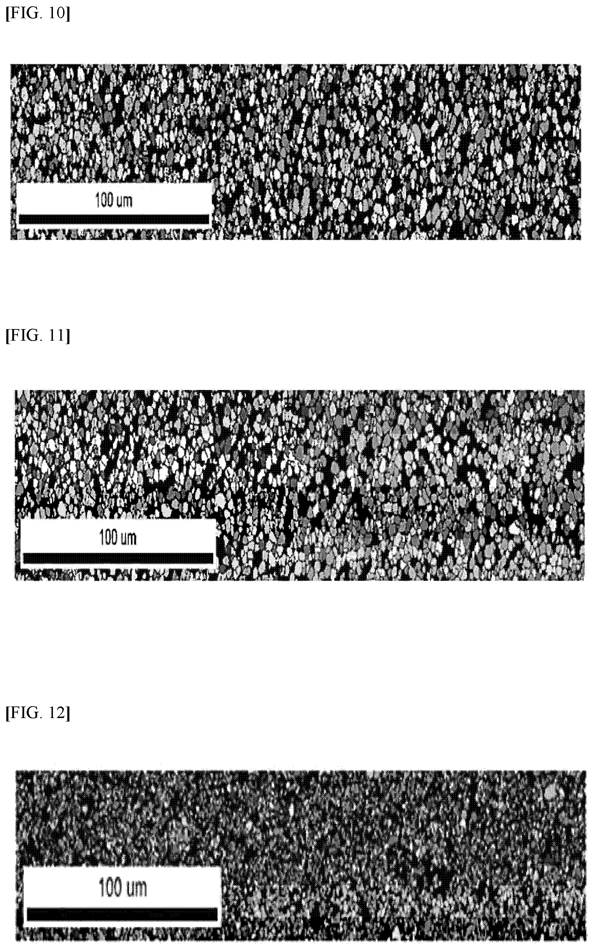

FIG. 10 is an IPF map obtained by EBSD analysis of a positive electrode for EBSD analysis manufactured using the positive electrode active material manufactured in Comparative Example 2.

FIG. 11 is an IPF map obtained by EBSD analysis of a positive electrode for EBSD analysis manufactured using the positive electrode active material manufactured in Comparative Example 3.

FIG. 12 is an IPF map obtained by EBSD analysis of a positive electrode for EBSD analysis manufactured using the positive electrode active material manufactured in Comparative Example 4.

[Table 3]

| | Particle size ($\mu$m) | | Single crystallinity (D/D$_{50}$) |
|---|---|---|---|
| | Primary particle ($D_{50}$) | Crystal grain (D) | |
| Example 1 | 3.07 | 2.56 | 0.834 |
| Example 2 | 2.45 | 2.02 | 0.824 |
| Comparative Example 1 | 3.08 | 2.85 | 0.925 |
| Comparative Example 2 | 3.04 | 2.95 | 0.970 |
| Comparative Example 3 | 2.47 | 2.30 | 0.931 |
| Comparative Example 4 | 1.50 | 1.04 | 0.693 |

Through Table 3, it was confirmed that the positive electrode active materials manufactured in Examples 1 and 2 had an average primary particle diameter ($D_{50}$) of 2.35 $\mu$m or more and 6.00 $\mu$m or less, a crystal grain size (D) of 2.00 $\mu$m or more and 5.00 $\mu$m or less, and a single crystallinity ($\chi$) calculated by Equation 1 described in herein of 0.500 or more and 0.850 or less. On the other hand, it was confirmed that the positive electrode active materials manufactured in Comparative Examples 1 to 3 had a single crystallinity ($\chi$) of more than 0.850, and the positive electrode active material manufactured in Comparative Example 4 had a single crystallinity ($\chi$) of 0.500 or more and 0.850 or less, and a crystal grain size (D) of less than 2.00 $\mu$m.

**Experimental Example 3: Measurement of Rolling Density**

5 g of each of the positive electrode active material of the examples and comparative examples was placed in a circular 4-point probe (Gold Pin) mold of a resistance measuring device (Hantech) with a diameter of 2.2 cm, and force was applied until a force equivalent to 2,000 kgf was reached to measure the height of the formed pellet (a difference between the height of the mold before the positive electrode active material was introduced and the height of the mold after the force of 2,000kgf was applied), respectively. The rolling density (g/cm$^3$) was calculated from the height of the pellet and was shown in Table 4 below.

[Equation 4]

$$\text{Pellet volume (cm}^3) = \pi \, (\text{radius of circular pellet holder})^2 \times \text{pellet height}$$

Rolling density (g/cm$^3$) = weight of positive electrode active material (g) / pellet volume (cm$^3$)          [Equation 5]

[Table 4]

| Division | Rolling density (g/cm$^3$) |
|---|---|
| Example 1 | 2.93 |
| Example 2 | 2.90 |
| Comparative Example 1 | 2.91 |
| Comparative Example 2 | 2.87 |
| Comparative Example 3 | 2.88 |
| Comparative Example 4 | 2.70 |

Through Table 4, it was confirmed that the positive electrode active materials manufactured in Examples 1 and 2 had a higher rolling density than that of the positive electrode active materials manufactured in Comparative Examples 2 to 4.

In particular, it was confirmed that in the case of the positive electrode active material manufactured in Comparative Example 4, i.e., having a crystal grain size (D) of less than 2.00 μm, the interfaces between the crystal grains, which serve as paths for lithium ions inside the positive electrode active material particles, is excessive, resulting in the lowest rolling density.

**Experimental Example 4: Evaluation of Battery Characteristics**

**Manufacturing of Coin-type Half-cells**

95 wt% of each of the positive electrode active materials manufactured in Examples 1 and 2 and Comparative Examples 1 to 4, 2.0 wt% of carbon black as a conductive material, and 3.0 wt% of polyvinylidene fluoride (PVDF) as a binder were mixed in an N-methylpyrrolidone (NMP) solvent to prepare a positive electrode slurry. The prepared positive electrode slurry was coated on one surface of an aluminum current collector, dried at 130°C, and rolled to prepare a positive electrode.

An electrode assembly was manufactured by using a lithium metal electrode as a negative electrode and interposing a porous polyethylene separator between the negative electrode and the positive electrode. The electrode assembly was placed inside a battery case, and an electrolyte obtained by dissolving 1.0M LiPF$_6$ in an organic solvent having ethylene carbonate (EC):ethyl methyl carbonate (EMC):diethyl carbonate (DEC) mixed at a volume ratio of 3:3:4 was injected to manufacture a coin-type half-cell.

**Evaluation of Battery Characteristics**

Using the coin-type half-cell manufactured as described above, the charge/discharge capacity was measured when it was charged in CC-CV mode up to 4.45 V at 25°C (0.1 C) and then discharged in CC mode to 2.5 V (0.1 C). The measured percentage (efficiency (%)) of the discharge capacity to the charge capacity was shown in Table 5 below.

Thereafter, the charge/discharge capacity was measured when it was charged in CC-CV mode up to 4.25 V at 25°C (0.1 C) and then discharged in CC mode to 2.5 V (2.0 C).

The measured percentage (2C/0.1C) of the discharge capacity at 2.0 C to the discharge capacity at 0.1 C was shown in Table 5 below.

In addition, the DC internal resistance (DCIR) was calculated and shown in Table 5 below. The DCIR value is a value calculated by dividing a difference between an initial voltage and a voltage at 60 seconds while discharging at a constant current of 0.1 C during the initial charge/discharge by the applied current.

[Table 5]

| | 0.1C (@25°C) | | 2C (@25°C) | 2C/0.1C (%) |
|---|---|---|---|---|
| | Efficiency (%) | DCIR (Ω) | Efficiency (%) | |
| Example 1 | 89.7 | 33.7 | 94.3 | 85.2 |

(continued)

| | 0.1C (@25°C) | | 2C (@25°C) | 2C/0.1C (%) |
|---|---|---|---|---|
| | Efficiency (%) | DCIR (Ω) | Efficiency (%) | |
| Example 2 | 90.2 | 31.9 | 94.1 | 85.0 |
| Comparative Example 1 | 89.2 | 36.7 | 93.8 | 84.1 |
| Comparative Example 2 | 88.2 | 40.5 | 93.5 | 82.9 |
| Comparative Example 3 | 89.9 | 33.3 | 93.6 | 84.3 |

Through Table 5, it was confirmed that the batteries including the positive electrode active materials manufactured in Examples 1 and 2 had an efficiency (%) at 0.1C of 89.7% or more, a DCIR at 0.1C of 33.7 Ω or less, an efficiency at 2C of 94.0% or more, and a 2C/0.1C of 85.0% or more.

On the other hand, it was confirmed that the batteries including the positive electrode active materials manufactured in Comparative Examples 1 and 2 had an efficiency (%) at 0.1C of less than 89.7%, a DCIR at 0.1C of more than 33.7 Ω, an efficiency at 2C of less than 94.0%, and a 2C/0.1C of less than 85.0%, and had inferior output, resistance, and rate characteristics compared to those of the batteries including the positive electrode active materials manufactured in Examples 1 and 2. In addition, it was confirmed that the battery including the positive electrode active material manufactured in Comparative Examples 3 had an efficiency at 2C of less than 94.0% and a 2C/0.1C of less than 85.0%, and had inferior output and rate characteristics compared to those of the batteries including the positive electrode active materials manufactured in Examples 1 and 2.

For reference, since the battery including the positive electrode active material manufactured in Comparative Example 4 had inferior rolling density, a separate battery characteristic evaluation was not performed.

In conclusion, through Tables 4 and 5, it was confirmed that the positive electrode active material according to the present invention comprises a lithium composite transition metal oxide which is in the form of a single particle and contains nickel at 50 mol% or more of the total metal excluding lithium, and has a specific range of single crystallinity and a specific range of crystal grain size, thereby improving the rolling density of the positive electrode active material while improving the electrochemical characteristics of the battery including the same.

**Claims**

1. A positive electrode active material comprising: a lithium composite transition metal oxide which is in the form of a single particle composed of 10 or less primary particles and contains nickel at 50 mol% or more of the total metal excluding lithium,
   wherein the positive electrode active material has a single crystallinity ($\chi$) according to Equation 1 below of 0.500 or more and 0.850 or less, and a crystal grain size (D) of 2.00 $\mu$m or more and 5.00 $\mu$m or less:

   $\chi$ = crystal grain size (D) ($\mu$m) / average particle diameter of primary particle ($D_{50}$) ($\mu$m).          [Equation 1]

2. The positive electrode active material according to claim 1, wherein the lithium composite transition metal oxide has a composition represented by Chemical Formula 1 below:

   [Chemical Formula 1]          $Li_{1+x}Ni_aCo_bMn_cM^1_dO_2$

   wherein:

   $M^1$ is at least one selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si, and
   $-0.10 \leq x \leq 0.10$, $0.500 \leq a < 1.000$, $0 < b < 0.500$, $0 < c < 0.500$, $0 \leq d \leq 0.100$, and $a+b+c+d=1$.

3. The positive electrode active material according to claim 1, wherein the lithium composite transition metal oxide includes at least one doping element selected from Al, W, Co, B, Zr, Y, Ce, Hf, La, Ba, F, P, S, Nb, Ta, Sc, Cr, V, Cu, Sr, Ti, Mg, Mo, Sn, Fe, Zn, and Si.

4. The positive electrode active material according to claim 1, wherein the average particle diameter ($D_{50}$) of the primary particles is 2.35 $\mu$m or more and 6.00 $\mu$m or less.

5. A positive electrode comprising the positive electrode active material according to any one of claims 1 to 4.

6. A lithium secondary battery comprising the positive electrode according to claim 5.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

## INTERNATIONAL SEARCH REPORT

| International application No. |
|---|
| **PCT/KR2024/017107** |

| | |
|---|---|
| **A.** | **CLASSIFICATION OF SUBJECT MATTER** |

**H01M 4/525**(2010.01)i; **H01M 4/505**(2010.01)i; **C01G 53/00**(2006.01)i; **H01M 4/131**(2010.01)i; **H01M 10/052**(2010.01)i; **H01M 4/02**(2006.01)i

According to International Patent Classification (IPC) or to both national classification and IPC

| | |
|---|---|
| **B.** | **FIELDS SEARCHED** |

Minimum documentation searched (classification system followed by classification symbols)

H01M 4/525(2010.01); C01G 53/00(2006.01); H01M 10/052(2010.01); H01M 4/36(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극활물질(cathode active material), 단입자(single particle), 리튬 복합 전이금속 산화물(lithium complex transition metal oxide), 단결정화도(single crystallinity), 결정립(crystal grain)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 2023-091567 A (PRIME PLANET ENERGY & SOLUTIONS INC.) 30 June 2023 (2023-06-30) See paragraphs [0036] and [0096]; example 1; and claim 7. | 1-6 |
| A | KR 10-2022-0080727 A (LG ENERGY SOLUTION, LTD.) 14 June 2022 (2022-06-14) See entire document. | 1-6 |
| A | KR 10-2023-0098072 A (LG ENERGY SOLUTION, LTD.) 03 July 2023 (2023-07-03) See entire document. | 1-6 |
| A | KR 10-2023-0054296 A (LG CHEM, LTD.) 24 April 2023 (2023-04-24) See entire document. | 1-6 |
| A | KR 10-2022-0089183 A (POSCO et al.) 28 June 2022 (2022-06-28) See entire document. | 1-6 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 February 2025** | **13 February 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# INTERNATIONAL SEARCH REPORT
## Information on patent family members

International application No.

**PCT/KR2024/017107**

| Patent document cited in search report | | | Publication date (day/month/year) | Patent family member(s) | | | Publication date (day/month/year) |
|---|---|---|---|---|---|---|---|
| JP | 2023-091567 | A | 30 June 2023 | CN | 116314645 | A | 23 June 2023 |
| | | | | JP | 7522717 | B2 | 25 July 2024 |
| | | | | US | 2023-0197945 | A1 | 22 June 2023 |
| KR | 10-2022-0080727 | A | 14 June 2022 | CN | 116569361 | A | 08 August 2023 |
| | | | | EP | 4250398 | A1 | 27 September 2023 |
| | | | | EP | 4250398 | A4 | 26 June 2024 |
| | | | | JP | 2023-553058 | A | 20 December 2023 |
| | | | | JP | 7599025 | B2 | 12 December 2024 |
| | | | | US | 2024-0250254 | A1 | 25 July 2024 |
| | | | | WO | 2022-124774 | A1 | 16 June 2022 |
| KR | 10-2023-0098072 | A | 03 July 2023 | CN | 118339677 | A | 12 July 2024 |
| | | | | EP | 4425611 | A1 | 04 September 2024 |
| | | | | JP | 2024-546664 | A | 26 December 2024 |
| | | | | KR | 10-2641896 | B1 | 29 February 2024 |
| | | | | US | 2023-0207799 | A1 | 29 June 2023 |
| | | | | WO | 2023-121389 | A1 | 29 June 2023 |
| KR | 10-2023-0054296 | A | 24 April 2023 | CN | 117178386 | A | 05 December 2023 |
| | | | | EP | 4303959 | A1 | 10 January 2024 |
| | | | | EP | 4303959 | A4 | 16 October 2024 |
| | | | | JP | 2024-512946 | A | 21 March 2024 |
| | | | | JP | 7608013 | B2 | 06 January 2025 |
| | | | | US | 2024-0186504 | A1 | 06 June 2024 |
| | | | | WO | 2023-063778 | A1 | 20 April 2023 |
| KR | 10-2022-0089183 | A | 28 June 2022 | CN | 116802842 | A | 22 September 2023 |
| | | | | EP | 4266407 | A1 | 25 October 2023 |
| | | | | JP | 2024-500898 | A | 10 January 2024 |
| | | | | KR | 10-2649190 | B1 | 18 March 2024 |
| | | | | US | 2024-0063385 | A1 | 22 February 2024 |
| | | | | WO | 2022-139290 | A1 | 30 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230151122

- KR 1020190131842